# EUROPÄISCHE PATENTSCHRIFT

(11) **EP 1 119 755 B1**
(45) Veröffentlichungstag und Bekanntmachung des Hinweises auf die Patenterteilung: **06.11.2002**
(21) Anmeldenummer: 99934551.5
(22) Anmeldetag: 02.07.1999
(51) Int. Cl.: G01M 3/22

(54) **VERFAHREN ZUR INTEGRALEN LECKSUCHE AN PRÜFLINGEN MIT RELATIV DÜNNEN WANDUNGEN**
METHOD FOR INTEGRALLY DETECTING LEAKS IN TEST PIECES WITH RELATIVELY THIN WALLS
PROCEDE DE DETECTION INTEGRALE DE FUITES SUR DES ECHANTILLONS A PAROIS RELATIVEMENT FINES

(30) Priorität: 10.10.1998 DE 19846801
(43) Veröffentlichungstag der Anmeldung: 01.08.2001
(73) Patentinhaber: Inficon GmbH, 50968 Köln (DE)
(72) Erfinder: NOTHHELFER, Markus, 97877 Wertheim-Dörlsberg (DE); WIDT, Rudi, D-50969 Köln (DE)
(74) Vertreter: Leineweber, Jürgen, Dipl.-Phys.
(86) Internationale Anmeldenummer: EP9904574
(87) Internationale Veröffentlichungsnummer: WO00022401

(56) Entgegenhaltungen:
- DE-A- 19 642 099
- PATENT ABSTRACTS OF JAPAN vol. 012, no. 100 (P-683), 2. April 1988 (1988-04-02) & JP 62 233758 A (NIPPON KOGYO KENSA KK), 14. Oktober 1987 (1987-10-14)

## Beschreibung

Die Erfindung bezieht sich auf ein Verfahren zur integralen Lecksuche an Testgas enthaltenden Prüflingen mit relativ dünnen Wandungen, bei welchem die Prüflinge in einem Testraum auf Lecks untersucht werden.

Aus der DE-A-196 42 099 ist ein Folien-Lecksucher bekannt. Die Dichtheitsprüfung erfolgt in der Weise, dass der auf Lecks zu untersuchende, Testgas enthaltende Prüfling in einen Testraum eingebracht wird, den zwei dehnbare Folien bilden. Diese vorbekannte Vorrichtung eignet sich insbesondere zur Prüfung der Dichtheit der Verpackung von verpackten Lebensmitteln (Schokoriegel, Kaffee usw.), Pharmazeutika (z.B. Tabletten), steril verpackten, in der Medizin einsetzbaren Gegenstände usw.. Die Verpackung dieser Güter muss dicht sein, da eindringender Luftsauerstoff oder Mikroben vom Produkt fern gehalten werden müssen. Insbesondere verpackte Produkte dieser Art werden in der vorliegenden Anmeldung als Prüflinge mit relativ dünnen Wandungen bezeichnet. Die Verpackung bildet die "dünne Wandung". Als Testgas dient in der Regel Helium.

Bei Prüflingen dieser Art, die mit großen Stückzahlen hergestellt werden, kann die Lecksuche nur stichprobenartig durchgeführt werden. Tritt aus einem einer Stichprobe unterworfenen Prüfling kein Testgas aus, dann bestehen die folgenden Möglichkeiten:
- Er ist dicht;
- er ist grob undicht (das Testgas ist bereits ausgetreten, bevor der Prüfling die Testkammer erreicht),
- er ist undicht; er enthält jedoch kein Testgas.

Um das Messergebnis besser interpretieren zu können, müsste im Anschluss an die Dichtheitsprüfung eine Testgas-Konzentrationsmessung der Gasatmosphäre des Verpackungsinhaltes durchgeführt werden. Im einfachsten Fall könnte dieses durch Einstechen mit einer geeigneten Sonde eines Schnüffel-Lecksuchers geschehen. Je kleiner jedoch das Gasvolumen im Prüfling ist, desto unsicherer wird dieser Kontrollschritt. Wenig in der Verpackung enthaltenes Gas wird durch die Schnüffelsonde relativ schnell abgesaugt und kann entweder nicht oder zumindest nicht vollständig nachgewiesen werden. Außerdem besteht die Gefahr des Verstopfens der Schnüffelsonde, wenn sich im Prüfling pulverförmige Produkte befinden.

Der vorliegenden Erfindung liegt die Aufgabe zugrunde, bei einem Verfahren der eingangs erwähnten Art einen in Bezug auf seine Sicherheit verbesserten Kontrollschritt vorzusehen.

Erfindungsgemäß wird diese Aufgabe dadurch gelöst, dass zur Kontrolle der Testgaskonzentration in den Prüflingen die Testgaskonzentration in mindestens einem der Prüflinge gemessen wird, indem die Wandung dieses Prüflings mit einem Leck versehen wird, und dass mit diesem Prüfling ein Lecksuchvorgang durchgeführt wird. Zweckmäßig ist der Prüfling, der der Kontrolle der Testgaskonzentration dient, ein Prüfling, der sich bei einem vorhergegangenen Lecksuchvorgang als dicht erwiesen hat.

Ergibt sich bei der Untersuchung des mit dem Leck versehenen Prüflings, dass er Testgas mit der gewünschten Konzentration enthält, dann ist seine Verpackung vor der Erzeugung des Lecks dicht gewesen. Daraus kann geschlossen werden, dass auch sämtliche anderen aus dieser Serie stammenden Prüflinge dicht sind. Enthält der der Kontrolle der Testgaskonzentration dienende Prüfling nicht die gewünschte Testgaskonzentration, ist es wahrscheinlich, dass Produktionsfehler vorliegen, sei es dass die Verpackung undicht ist oder dass der Prüfling nicht ordnungsgemäß mit Testgas gefüllt wurde.

Die Erzeugung eines ausreichend kleinen Lecks in der Wandung eines Prüflings ist schwierig. Bereits durch das Einstechen einer relativ dünnen Nadel entsteht ein Grobleck, das keine sichere Konzentrationsmessung mehr zulässt. Es besteht die Gefahr, dass das Testgas bereits zu Beginn des Lecksuchzyklus', also während der Evakuierung des Testraumes und vor dem Umschalten auf Leckmessung, vollständig aus dem Prüfling austritt. Im Rahmen der Erfindung wird deshalb weiter vorgeschlagen, den Prüfling mit einem definierten Leck zu versehen. Dieses geschieht dadurch, dass der zu untersuchende Prüfling z.B. mit einer Nadel angestochen und danach das Loch sofort mit einem Flickenleck verschlossen wird. Da der Totaldruck innerhalb und außerhalb der Packung in aller Regel gleich oder zumindest nicht wesentlich verschieden ist, verändert sich zwischen dem Aufstechen und dem Aufbringen des Flickenlecks nichts bzw. nur wenig an der Konzentration im Prüfling. Danach erfolgt eine erneute Lecksuche im Testraum. Das Flikkenleck stellt eine definierte Undichtheit dar. Diese Undichtheit ist so gering, dass sich während der Prüfung die Konzentration in der Verpackung nicht ändert. Das bei dieser Prüfung angezeigte Leckratensignal ist ein Maß für die in der Packung befindliche Testgaskonzentration.

Weitere Vorteile und Einzelheiten der Erfindung sollen an Hand einer Figur erläutert werden.

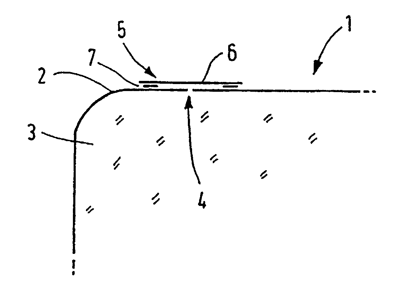

Die Figur zeigt einen Teil eines Prüflings 1 mit einer relativ dünnen Wandung 2 (z.B. einer Verpackungshülle) und mit seinem Inhalt 3, bei dem es sich um einen verpackten Gegenstand beliebiger Art (auch Pulver) handeln kann. Werden Prüflinge 1 dieser Art in großen Stückzahlen hergestellt, dann ist es zweckmäßig, in zumindest einige dieser Prüflinge ein Testgas einzubringen, um sie stichprobenartig auf Lecks untersuchen zu können. Bei der Verwendung von Helium als Testgas geschieht das zweckmäßig mit einer Konzentration bis 100 %, vorzugsweise 10 %. Sollte bei einer stichprobenartigen Leckuntersuchung des dargestellten, noch unversehrten Prüflings Helium nicht nachgewiesen worden sein, dann muss festgestellt werden, ob es sich tatsächlich um einen dichten Prüfling handelt. Dieses geschieht durch eine Messung der Konzentration des Testgases im Prüfling. Dazu wird der Prüfling z.B. mit einer Nadel mit einem Leck 4 versehen, über das das Flickenleck 5 aufgebracht wird. Danach wird die Verpackung nochmals in den Testraum eingelegt und auf ein Leck untersucht. Aus dem Ergebnis lassen sich - wie weiter oben beschrieben - Rückschlüsse auf die Produktionsqualität ableiten.

Das Flickenleck besteht aus einem sehr dünnen, für das Testgas durchlässigen Folienabschnitt 6. Haftet dieser nicht selbst, kann er mit einem Kleberand 7 ausgerüstet sein. Das Flickenleck wird dann nach Art eines Pflasters auf das durch Einstechen der Verpackung erzeugte Leck 4 aufgeklebt. Als Werkstoff für die Folie hat sich Fluorcarbon als zweckmäßig erwiesen. Die Dicke und die freie Fläche der Folie bestimmen die Leckrate. Bezüglich Helium als Testgas gilt, dass eine Fluorcarbon-Folie mit einer Dicke von 25 γm eine Leckrate von ca. 10⁻⁴ mb.l/s.cm² hat.

Die Erfindung ist an Hand eines Folien-Lecksuchers der aus DE-A-196 42 099 bekannten Art erläutert worden, der vorzugsweise der Prüfung der Dichtheit von Verpackungen dient. Weder auf Lecksucher noch auf Prüflinge dieser Art ist sie jedoch nicht beschränkt. Bei jedem anderen Lecksucher, der in der Lage ist, Testgas enthaltende Prüflinge integral auf Lecks zu untersuchen, kann diese Erfindung angewendet werden. In Bezug auf die prüflinge ist vorauszusetzen, dass ihre Wandung es zulässt, sie nach einem ersten Lecksuchvorgang gezielt mit einem Leck versehen zu können.

## Patentansprüche

1. Verfahren zur integralen Lecksuche an Prüflingen mit relativ dünnen Wandungen, bei welchem die Testgas enthaltenden Prüflinge (1) in einem Testraum auf Lecks untersucht werden, **dadurch gekennzeichnet, dass** zur Kontrolle der Testgaskonzentration in den Prüflingen (1) die Testgaskonzentration in mindestens einem der Prüflinge (1) gemessen wird, indem seine Wandung (2) mit einem Leck (4) versehen wird, und dass mit diesem Prüfling (1) ein Lecksuchvorgang durchgeführt wird.

2. Verfahren nach Anspruch 1, **dadurch gekennzeichnet, dass** der Prüfling, der der Kontrolle der Testgaskonzentration dient, ein Prüfling ist, der sich bei einem vorhergegangenen Lecksuchvorgang als dicht erwiesen hat.

3. Verfahren nach Anspruch 1 oder 2, **dadurch gekennzeichnet, dass** das Leck (4) unmittelbar nach der Erzeugung des Lecks (4) mit einem für Testgas durchlässigen Flickenleck (5) verschlossen wird.

4. Verfahren nach Anspruch 3, **dadurch gekennzeichnet, dass** das Flickenleck (5) einen für Testgas durchlässigen Folienabschnitt (6) aufweist.

5. Verfahren nach Anspruch 4, **dadurch gekennzeichnet, dass** das Flickenleck (5) auf einer Seite mit einem Haftmittel (7) versehen ist.

6. Verfahren nach Anspruch 5, **dadurch gekennzeichnet, dass** das Flickenleck (5) rund ist und mit einem umlaufenden Kleberand (7) ausgerüstet ist.

## Claims

1. Method for the integrated leak location in test specimens having relatively thin walls in which the test specimens (1) containing the test gas are examined for leaks in a test chamber, **characterized in that**, to monitor the test gas concentration in the test specimens (1), the test gas concentration is measured in at least one of the test specimens (1) by providing its wall (2) with a leak (4) and **in that** a leak location procedure is performed with said test specimen (1).

2. Method according to Claim 1, **characterized in that** the test specimen that serves to monitor the test gas concentration is a test specimen that has proved to be leaktight in a preceding leak location procedure.

3. Method according to Claim 1 or 2, **characterized in that** the leak (4) is immediately sealed after the production of the leak (4) is sealed with a leak repair (5) permeable for the test gas.

4. Method according to Claim 3, **characterized in that** the leak repair (5) comprises a film portion (6) permeable for the test gas.

5. Method according to Claim 4, **characterized in that** the leak repair (5) is provided on one side with an adhesive agent (7).

6. Method according to Claim 5, **characterized in that** the leak repair (5) is round and is equipped with a circumferential adhesive rim (7).

## Revendications

1. Procédé de détection intégrale de fuites sur des échantillons avec des parois relativement minces, dans lequel les échantillons (1) contenant un gaz témoin sont analysés dans une chambre d'essai pour déceler des fuites, **caractérisé en ce que** pour contrôler la concentration de gaz témoin dans les échantillons (1), la concentration de gaz témoin est mesurée dans au moins un des échantillons (1) en pourvoyant sa paroi (2) d'une fuite (4), et **en ce qu'**une opération de détection de fuite est effectuée avec cet échantillon (1).

2. Procédé selon la revendication 1, **caractérisé en ce que** l'échantillon qui sert au contrôle de la concentration de gaz témoin, est un échantillon qui s'est avéré comme étant étanche lors d'une opération de détection de fuite précédente.

3. Procédé selon l'une ou l'autre des revendications 1 et 2, **caractérisé en ce que** directement après la production de la fuite (4), la fuite (4) est fermée avec une fuite sur rapiéçage (5), perméable au gaz témoin.

4. Procédé selon la revendication 3, **caractérisé en ce que** la fuite sur rapiéçage (5) présente un tronçon de feuille (6) perméable au gaz témoin.

5. Procédé selon la revendication 4, **caractérisé en ce que** la fuite sur rapiéçage (5) est pourvue d'un moyen adhésif (7) sur un côté.

6. Procédé selon la revendication 3, **caractérisé en ce que** la fuite sur rapiéçage (5) est ronde et pourvue d'un bord adhésif (7) périphérique.
